(19)

**Europäisches Patentamt**
**European Patent Office**
**Office européen des brevets**

(11)　**EP 4 776 219 A1**

(12)　# EUROPEAN PATENT APPLICATION

(43) Date of publication:
**15.07.2026　Bulletin 2026/29**

(21) Application number: **25220676.8**

(22) Date of filing: **04.12.2025**

(51) International Patent Classification (IPC):
**G06T 5/70** (2024.01)　　**G06T 7/00** (2017.01)
**G06T 7/13** (2017.01)

(52) Cooperative Patent Classification (CPC):
**G06T 5/70; G06T 7/0008; G06T 7/13;**
G06T 2207/20028; G06T 2207/30156

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:　**09.01.2025　JP 2025003655
26.09.2025　JP 2025160660**

(71) Applicant: **Ricoh Company, Ltd.**
**Tokyo 143-8555 (JP)**

(72) Inventors:
• **MASUDA, Koji**
　**Tokyo, 143-8555 (JP)**
• **HINO, Makoto**
　**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54)　## MEASURING APPARATUS, MEASURING METHOD, AND CARRIER MEDIUM

(57)　A measuring apparatus (1) includes an illuminator (11), a light receiver (12), a color-separated image generation unit (21), and a smoothing processing unit (22). The illuminator (11) emits light to an object to be measured. The light receiver (12) receives reflection light reflected from the object illuminated by the light emitted from the illuminator (11); and generates image data based on the reflection light. The color-separated image generation unit (21) is configured to generate multiple color-separated images, each having corresponding amount of noise, based on the image data generated by the light receiver (12). The smoothing processing unit (22) is configured to repeatedly perform a smoothing process on each of the multiple color-separated images generated by the color-separated image generation unit (21), a number of times according to the corresponding amount of noise.

FIG. 1

EP 4 776 219 A1

**Description**

BACKGROUND

Technical Field

The present disclosure relates to a measuring apparatus, a measuring method, and a carrier medium

Related Art

An inspection apparatus that inspects, as a measurement object, for example, a painted surface of a vehicle body for defects is known. Japanese Patent No. 4322230 discloses a technique of repeating a defect enhancement process two times to detect a defect. The defect enhancement process includes performing an edge enhancement process on image data generated from an output signal from an image-capturing camera, which captures an image of an inspection surface, and then performing a smoothing process on the image data.

Japanese Patent No. 5790446 discloses a technique of discriminating an uneven defect in a surface of an inspection object. The technique irradiates the inspection object with a composite illumination pattern, which is obtained by phase-shifting and combining light and dark patterns having wavelengths different from each other; captures an image of the inspection object; and decomposes the image of the inspection object for each wavelength to discriminate an uneven defect.

When an image obtained by capturing an image of an object is decomposed into, for example, color components of red, green, and blue and image processing is performed, the intensity of noise may periodically vary on the image. In such a case, even when the defect enhancement process is repeated as in the technique disclosed in Japanese Patent No. 4322230, the periodic variation in the intensity of noise on the image is not reduced, and it is difficult to discriminate an uneven defect as in the technique disclosed in Japanese Patent No. 5790446. Thus, the accuracy of measuring a measurement object may be insufficient.

SUMMARY

The present disclosure described herein provides a measuring apparatus that can increase the accuracy of measuring a measurement object.

According to one aspect of the present disclosure, a measuring apparatus includes an illuminator, a light receiver, a color-separated image generation unit, and a smoothing processing unit. The illuminator emits light to an object to be measured. The light receiver receives reflection light reflected from the object illuminated by the light emitted from the illuminator; and generates image data based on the reflection light. The color-separated image generation unit is configured to generate multiple color-separated images, each having corresponding amount of noise, based on the image data generated by the light receiver. The smoothing processing unit is configured to repeatedly perform a smoothing process on each of the multiple color-separated images generated by the color-separated image generation unit, a number of times according to the corresponding amount of noise.

According to one aspect of the present disclosure, a measuring method executed by a measuring apparatus includes emitting light to an object to be measured; receiving reflection light reflected from the object illuminated by the light emitted in the emitting; generating image data based on the reflection light; generating multiple color-separated images, each having corresponding amount of noise, based on the image data generated in the generating; and repeatedly performing a smoothing process on each of the multiple color-separated images generated, a number of times according to the corresponding amount of noise.

According to one aspect of the present disclosure, a carrier medium that causes a measuring apparatus that measures a measurement object to execute a process, the process including emitting light to an object to be measured; receiving reflection light reflected from the object illuminated by the light emitted in the emitting; generating image data based on the reflection light; generating multiple color-separated images, each having corresponding amount of noise, based on the image data generated in the generating; and repeatedly performing a smoothing process on each of the multiple color-separated images generated, a number of times according to the corresponding amount of noise.

According to an aspect of the present disclosure, the accuracy of measuring a measurement object can be increased.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a diagram of a configuration of a measuring apparatus according to an embodiment of the present disclosure;

FIG. 2 is a diagram illustrating a configuration of an optical section according the embodiment of the present disclosure;

FIG. 3A and FIG. 3B are diagrams illustrating the relation between the optical section of the measuring apparatus and a measurement object according to the embodiment of the present disclosure;

FIG. 4A, FIG. 4B, and FIG. 4C are diagrams illustrating an optical arrangement of the measuring apparatus according to the embodiment of the present disclosure;

FIG. 5A, FIG. 5B, FIG. 5C, and FIG. 5D are diagrams and an image of an illumination pattern formed on a second diffuser plate in the measuring apparatus according to the embodiment of the present disclosure;

FIG. 6 is a block diagram illustrating a hardware configuration of a processing unit of the measuring apparatus according to the embodiment of the present disclosure;

FIG. 7 is a block diagram illustrating a functional configuration of the measuring apparatus according to the embodiment of the present disclosure;

FIG. 8 is a flowchart presenting a measuring process executed by the measuring apparatus according to the embodiment of the present disclosure;

FIG. 9 is a flowchart presenting a defect detection process executed by the measuring apparatus according to the embodiment of the present disclosure;

FIG. 10A, FIG. 10B, FIG. 10C, and FIG. 10D are graphs presenting spectra of light reflected from a measurement object in the measuring apparatus according to the embodiment of the present disclosure;

FIG. 11A, FIG. 11B, and FIG. 11C are graphs and an image of a smoothing process according to a comparative example;

FIG. 12 is a graph presenting signals when a smoothing process is performed on a red signal, a green signal, and a blue signal in the measuring apparatus according to the embodiment of the present disclosure;

FIG. 13 is a graph presenting an example of a signal obtained by performing a phase shift calculation on a signal on which the smoothing process has been performed in the measuring apparatus according to the embodiment of the present disclosure;

FIG. 14A and FIG. 14B are an image and a graph of a logarithmic (Log) image on which the smoothing process has been performed in the measuring apparatus according to the embodiment of the present disclosure; and

FIG. 15 is a diagram illustrating an optical arrangement of a modification of the measuring apparatus according to the embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments for implementing the disclosure are described below referring to the drawings. Like reference signs are applied to identical or corresponding components throughout the drawings and redundant description may be omitted.

One or More Embodiments

Configuration of Optical System

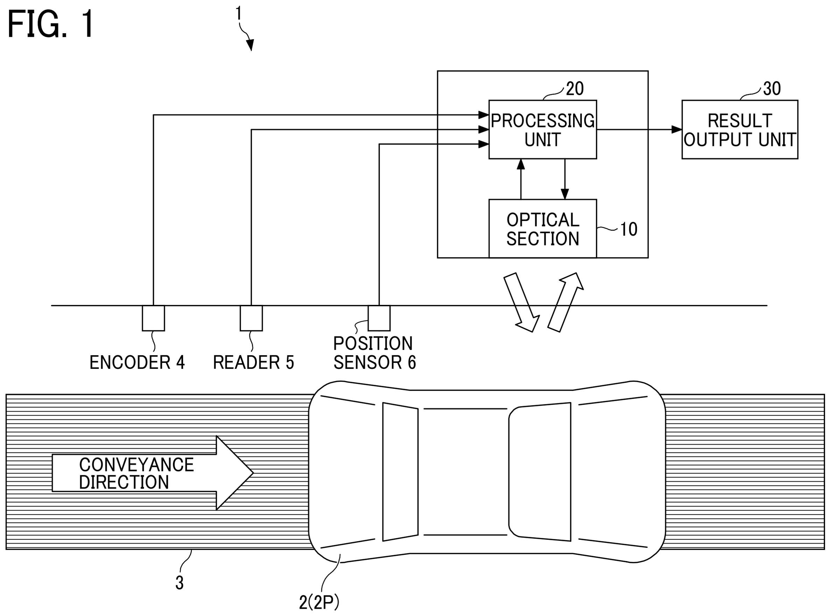

FIG. 1 is a diagram of a configuration of a measuring apparatus 1 according to an embodiment of the present disclosure. The measuring apparatus 1 measures the state of a surface 2P of a measurement object 2, which is being conveyed in a conveyance direction. The state of the surface 2P of the measurement object 2 may be represented by one or more characteristic values based on the image of the surface 2P. The measurement object 2 is conveyed by a conveyor 3.

The measurement object 2 is, for example, a painted vehicle body such as a large vehicle, a passenger car, or a compact car. The vehicle body is, for example, the surface 2P of the vehicle body, and the surface 2P of the vehicle body may be painted.

The measurement object 2 may be an object other than a vehicle body, and the surface 2P of the measurement object 2 may not be painted.

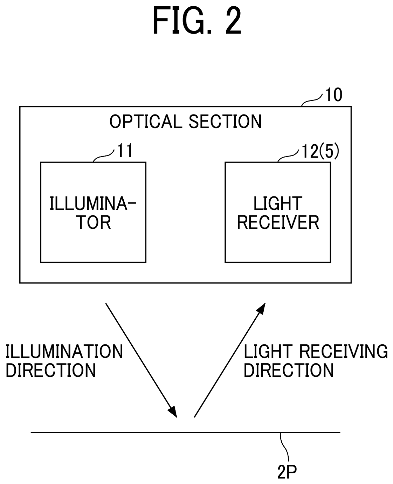

The measuring apparatus 1 includes an optical section 10. The optical section 10 will be described in detail with reference to FIG. 2. FIG. 2 is a diagram illustrating a configuration of the optical section 10 according to the embodiment of the present disclosure. The optical section 10 includes an illuminator 11 and a light receiver 12. A component including the illuminator 11 and the light receiver 12 is referred to as the "optical section 10."

The optical section 10 illuminates the measurement object 2 and receives light specularly reflected from the illuminated measurement object 2. The illuminator 11 is fixedly installed on, for example, a housing of the optical section 10 and illuminates a measurement point of the measurement object 2.

Examples of the light receiver 12 include an imaging device such as a camera including an imaging element as an image sensor 5, such as a charge coupled device (CCD) or a complementary metal-oxide-semiconductor (CMOS).

The light receiver 12 receives light reflected from the measurement object 2, which is illuminated by the illuminator 11.

The light receiver 12 may focus on the surface 2P of the measurement object 2 and receive and measure light reflected from the measurement object 2 at a predetermined time interval or in response to a trigger signal from the outside. An illumination direction of a light source 13 and a light receiving direction of the light receiver 12 are arranged along the optical axis so that the light is specularly reflected from the surface 2P.

A region to be measured by the measuring apparatus 1 is predefined on the measurement object 2. However, the entire measurement object 2 does not have to be within the measurement region. For example, when the measurement object 2 is a vehicle body, regions with large curved surfaces, such as around a door knob or near the edges of the vehicle body, are typically excluded from the measurement region. The illuminator 11 and the light receiver 12 may be arranged in accordance with a measurable region that has been predefined as the measurement region.

When the light receiver 12 is an imaging device, the light receiver 12 generates image data of the measurement object 2. The image data may be, for example, a two-dimensional color image. The light receiver 12 may be a visible light camera such as an area camera.

The surface 2P of the measurement object 2 may be a smooth, glossy surface. The light incident on the surface 2P from the illuminator 11 is specularly reflected because the incident angle equals the reflection angle. Further, the surface 2P is a set of multiple curved surface regions having different normal directions and curvatures.

The measuring apparatus 1 further includes an encoder 4, a reader 5, a position sensor 6, a processing unit 20, and a result output unit 30 in addition to the optical section 10. The processing unit 20 controls, for example, the timing of the operation of the measuring apparatus 1. The encoder 4, the reader 5, and the position sensor 6 are connected to the processing unit 20.

The encoder 4 monitors the conveyance state of the conveyor 3, such as its conveyance speed. The reader 5 acquires information of the measurement object 2, such as its unique identification (ID), vehicle model, and color. The position sensor 6 acquires position information of the measurement object 2, such as its approach to the measurement region of the measurement object 2 or its presence in the measurement region.

The processing unit 20 measures the state of the measurement object 2 and detects a defect based on the light reflected from the measurement object 2 and received by the light receiver 12. The result output unit 30 outputs information relating to the characteristic values and defects at the respective measurement positions of the measurement object 2 in formats such as a monitor display, printed documents, or electronic data. The measuring apparatus 1 can provide information useful for identifying the cause of the defect in the preceding process and for repairing the defect in the subsequent process, based on the determined defect type.

When the measurement object 2 is a painted vehicle body, the measuring apparatus 1 measures the presence of defects in painted surfaces 2P of parts such as the door, bonnet, roof, trunk lid, and rear bumper of the vehicle body. The defects in the painted surfaces 2P refer to scratches, cracks, unevenness, dirt, and discoloration on the painted surfaces. The painting defects include dust particles, fisheyes, pinholes, and orange peel.

In the example in FIG. 1, the measuring apparatus 1 is placed on one side of the conveyor 3. This does not imply any limitation. In some embodiments, the measuring apparatus 1 may be placed on each side of the conveyor 3. When the measuring apparatus 1 is placed on each side of the conveyor 3, the measurement object 2 may be placed between the measuring apparatuses 1. Alternatively, the measuring apparatuses 1 may be arranged offset from each other in the conveyance direction, with the measurement object 2 positioned between the measuring apparatuses 1.

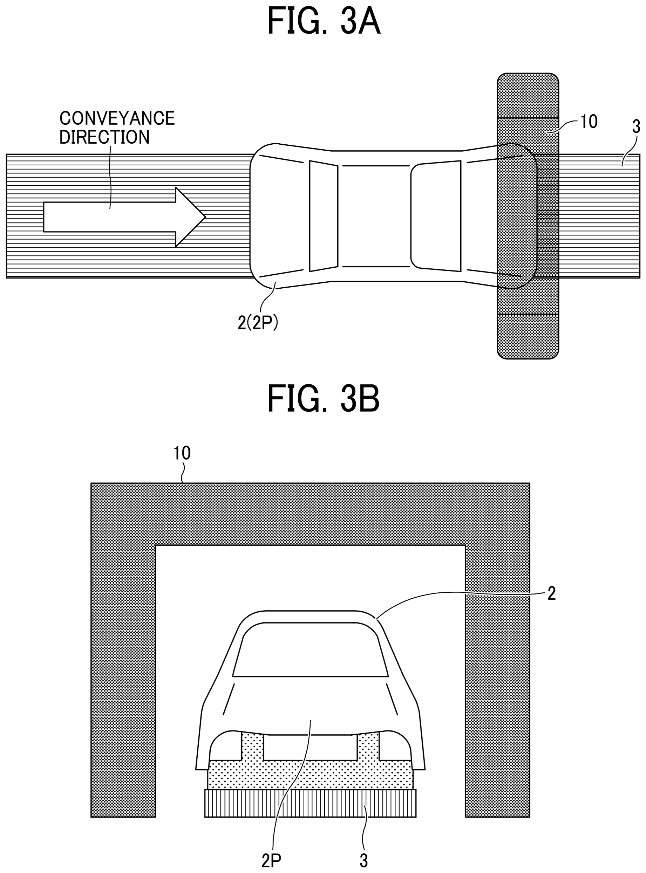

FIGS. 3A and 3B are diagrams illustrating the relation between the optical section 10 of the measuring apparatus 1 and the measurement object 2 according to the embodiment of the present disclosure. FIG. 3A is a plan view. FIG. 3B is a front view. The measurement object 2 is conveyed in the conveyance direction by the conveyor 3. The optical section 10 is disposed in a gate shape so as to surround the conveyed measurement object 2. The measurement object 2 is conveyed at a constant speed through the gate-shaped optical section 10 for measurement. When the measurement object 2 passes through the gate-shaped optical section 10, the entire measurement object 2 is measured.

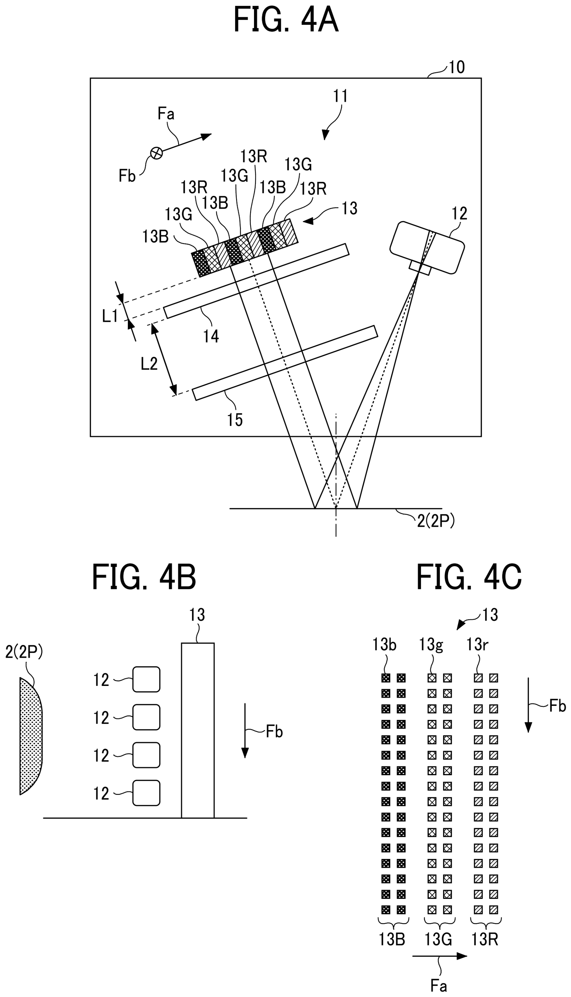

FIGS. 4A, 4B, and 4C are diagrams illustrating an optical arrangement of the measuring apparatus 1 according to the embodiment of the present disclosure. FIG. 4A is a plan view. FIG. 4B is a front view. FIG. 4C is a diagram illustrating details of the light source 13. FIGS. 4A, 4B, and 4C illustrate an array direction Fa and an orthogonal direction Fb. The array direction Fa indicates an array direction in which light sources 13B, 13G, and 13R are arranged. The orthogonal direction Fb indicates a direction orthogonal to the array direction Fa. Like reference signs are applied to components identical or corresponding to components described above, and redundant description is omitted.

As illustrated in FIG. 4A, in the measuring apparatus 1, the illuminator 11 includes a light source 13, a first diffuser plate 14, and a second diffuser plate 15. The light source 13 includes multiple light sources 13B, 13G, and 13R. The light sources 13B, 13G, and 13R emit light beams having different wavelengths. For example, the light sources 13B, 13G, and 13R may emit blue light, green light, and red light, respectively. The light sources 13B, 13G, and 13R are arranged along the array direction Fa. The array direction Fa has a predetermined angle with respect to the horizontal direction of the surface 2P of the vehicle body.

FIG. 4B illustrates the light receiver 12 and the light source 13 positioned relative to the surface 2P of the measurement object 2. The light source 13 has directivity that is elongated in the orthogonal direction Fb. Multiple light receivers 12 are arranged in the orthogonal direction Fb. In the light source 13, point light sources 13b that emit light beams having the same wavelengths, point light sources 13g that emit light beams having the same wavelengths, and point light sources 13r that emit light beams having the same wavelengths are arranged in the orthogonal direction Fb. Thus, linear light sources that emit light beams having different wavelengths may be arranged in the array direction Fa in a predetermined order.

As illustrated in FIG. 4C, the light source 13 includes the light sources 13B, 13G, and 13R. The light source 13B includes multiple point light sources 13b arranged in the orthogonal direction Fb. The light source 13G includes multiple point light sources 13g arranged in the orthogonal direction Fb. The light source 13R includes multiple point light sources 13r arranged in the orthogonal direction Fb. While the light sources are arranged in the order of the colors of blue, green, and red as the predetermined order in FIGS. 4A, 4B, and 4C, the order of the array may be different from the above order. The order may be an order including a light source of a color other than the colors of blue, green, and red.

The colors of red, green, and blue are the minimum colors for performing phase shift calculations during defect detection and are also the primary colors of visible light, making them versatile and widely applicable.

While the point light sources 13b, the point light sources 13g, and the point light sources 13r are arranged in two rows each in the orthogonal direction Fb in FIG. 4C, the number of rows is not limited to two, and one or multiple rows such as one or three rows may be provided. The point light sources 13b, the point light sources 13g, and the point light sources 13r are arranged in the orthogonal direction Fb at a pitch of, for example, several millimeters to several tens of millimeters. With such an array, the light source 13 is used as a light source including linear light sources of multiple colors. The number of point light sources 13b, the number of point light sources 13g, and the number of point light sources 13r do not have to be the same, and can be changed in accordance with the emission luminance or the spectral sensitivity of the light receiver 12.

Each of the point light sources 13b, 13g, and 13r may include a lens member that leads an optical path of emitted light to the measurement object 2. The lens member is provided on, for example, a chip of each of the point light sources 13b, 13g, and 13r. With the lens member, the angle of divergence of the light emitted by each of the point light sources 13b, 13g, and 13r can be reduced, and the directivity is enhanced.

Thus, the illumination pattern with high power can be formed on the second diffuser plate 15. Further, when the sinusoidal illumination pattern in the array direction Fa and the uniform illumination pattern in the orthogonal direction Fb are formed, the degrees of freedom of the angles of divergence of the light emitted by the point light sources 13b, 13g, and 13r increase.

The point light sources 13b, 13g, and 13r may be light emitting diode (LED) elements, organic electro luminescence (EL) elements, or laser elements. In order to form an illumination pattern with further high luminance on the second diffuser plate 15, an optical element may be additionally provided in the illuminator 11. For example, optical elements may be inserted between the point light sources 13b, 13g, and 13r and the first diffuser plate 14, or optical elements may be inserted in another region.

The first diffuser plate 14 is disposed between the light source 13 and the measurement object 2. The second diffuser plate 15 is disposed between the first diffuser plate 14 and the measurement object 2. The second diffuser plate 15 forms an illumination pattern of light that illuminates the measurement object 2. The formed illumination pattern can be used as a secondary light source for the measurement object 2.

The light source 13, the first diffuser plate 14, and the second diffuser plate 15 are positioned in parallel to each other. In other words, the array direction Fa of the multiple light sources 13B, 13G, and 13R, the first diffuser plate 14, and the second diffuser plate 15 are positioned in parallel to each other. The lengths of the first diffuser plate 14 and the second diffuser plate 15 in the array direction Fa are preferably equal to each other and are preferably larger than the length of the light source 13.

FIG. 4A also illustrates distances L1 and L2. The distance L1 indicates the distance between the light source 13 and the first diffuser plate 14. The distance L2 indicates the distance between the first diffuser plate 14 and the second diffuser plate 15. In order to uniformize the distribution of the luminance in the orthogonal direction Fb of the illumination pattern formed on the second diffuser plate 15, a relation of L1 < L2 is preferably satisfied.

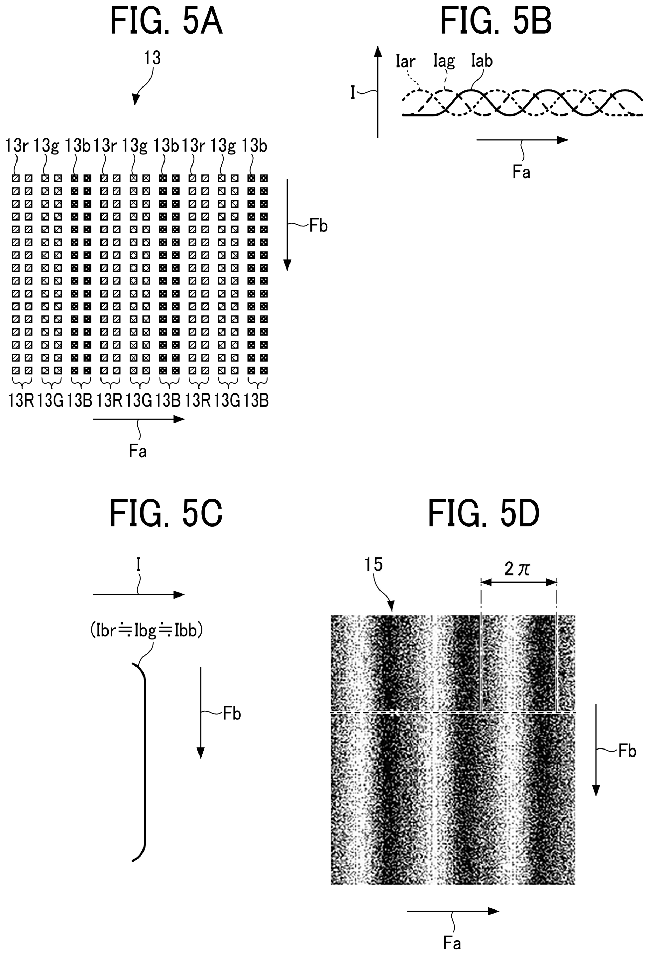

FIGS. 5A, 5B, 5C, and 5D are diagrams and an image of an illumination pattern formed on the second diffuser plate 15 in the measuring apparatus 1 according to the embodiment of the present disclosure. FIG. 5A illustrates an array of the light source 13. FIG. 5B illustrates a distribution of the luminance of light in the array direction Fa. FIG. 5C illustrates a distribution of the luminance of light in the orthogonal direction Fb. FIG. 5D illustrates an illumination pattern formed on the second diffuser plate 15. The symbol I illustrated in FIGS. 5B and 5C indicates the luminance of light. In the following description, like reference signs are applied to components identical or corresponding to components described above, and redundant description is omitted.

As illustrated in FIG. 5A, the light source 13 includes multiple light sources 13R, multiple light sources 13G, and multiple light sources 13B arranged in the array direction Fa in the order of the light source 13R, the light source 13G, and the light source 13B. The light source 13R includes multiple point light sources 13r. The light source 13G includes multiple point light sources 13g. The light source 13B includes multiple point light sources 13b.

FIG. 5B illustrates luminances Iar, Iag, and Iab. The luminances Iar, Iag, and Iab indicate luminances of red light from the light source 13R, green light from the light source 13G, and blue light from the light source 13B in the array direction Fa, respectively. To calculate phase information through phase shift calculations during defect detection, it is preferable that the distribution of the luminance of each light beam matches a sinusoidal pattern, although a distribution close to a sinusoidal pattern is also acceptable.

FIG. 5C illustrates luminances Ibr, Ibg, and Ibb. The luminances Ibr, Ibg, and Ibb indicate luminances of red light from the light source 13R, green light from the light source 13G, and blue light from the light source 13B in the orthogonal direction Fb, respectively. As illustrated, the luminances Ibr, Ibg, and Ibb each have approximately the same value in the orthogonal direction Fb. In order to use the light source 13 as a linear light source, the distribution of the luminance of each light beam is preferably uniform.

FIG. 5D illustrates a distribution of the luminance for each of the colors of red, green, and blue as the illumination pattern formed on the second diffuser plate 15. The sine waves in the array direction Fa, corresponding to red, green, and blue, overlap with a phase shift of $2\pi/3$ radians therebetween. To accurately calculate phase information using phase shift calculations during defect detection, it is preferable that the illumination pattern is a stripe pattern combining light and dark patterns, where the luminance of light varies sinusoidally in the array direction Fa for each wavelength.

Configuration of Measuring Apparatus 1

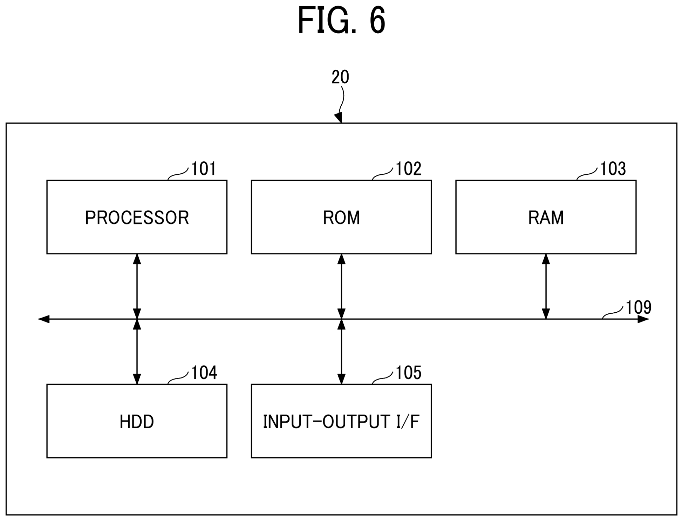

FIG. 6 is a block diagram illustrating a hardware configuration of the processing unit 20 of the measuring apparatus 1 according to the embodiment of the present disclosure. The processing unit 20 includes a processor 101, a read only memory (ROM) 102, a random access memory (RAM) 103, a hard disk drive (HDD) 104, and an input-output interface (I/F) 105. These components are electrically connected to one another via a bus 109.

The processor 101 includes various arithmetic devices such as a central processing unit (CPU) and a graphics processing unit (GPU). The processor 101 controls the operation of the processing unit 20. The ROM 102 stores a program executed in the processor 101. The RAM 103 is used as a work area in which the processor 101 executes a program. The HDD 104 stores various kinds of data such as programs. The input-output I/F 105 is an interface for inputting and outputting various signals and data to and from an external device.

Part or all of the functions of the processor 101 may be implemented by an electronic circuit, such as an application specific integrated circuit (ASIC) or a field-programmable gate array (FPGA).

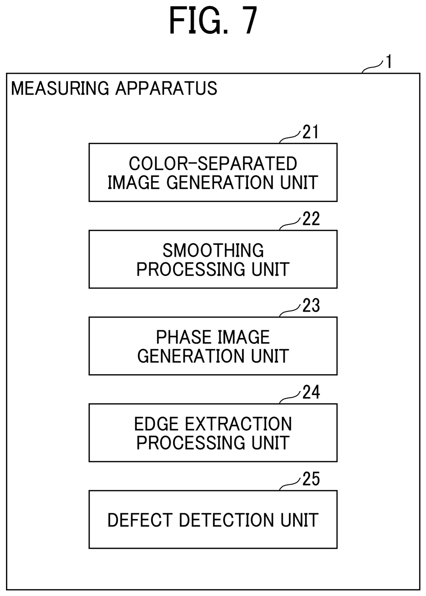

FIG. 7 is a block diagram illustrating a functional configuration of the measuring apparatus 1 according to the embodiment of the present disclosure. The measuring apparatus 1 includes a color-separated image generation unit 21, a smoothing processing unit 22, a phase image generation unit 23, an edge extraction unit 24, and a defect detection unit 25, and these units may be included in the processing unit 20 illustrated in FIG. 1.

The color-separated image generation unit 21 generates multiple color-separated images based on image data generated through reception of light reflected from the measurement object 2 irradiated with illumination light. The measurement object 2 is, for example, a vehicle body irradiated with illumination light while being conveyed in the conveyance direction; however, the measurement object 2 is not limited to such a vehicle body. The generated image data may be generated based on a signal output from an imaging element having a pixel array that is a Bayer array.

The smoothing processing unit 22 performs a smoothing process on each of the color-separated images using, for example, a smoothing filter such as a bilateral filter. The smoothing processing unit 22 repeatedly performs the smoothing process on each of the multiple color-separated images generated by the color-separated image generation unit 21 the number of times corresponding to the amount of noise included in the color-separated image.

More specifically, the smoothing processing unit 22 repeatedly performs the smoothing process on a color-separated image having a small amount of noise among the multiple color-separated images a number of times smaller than the number of times of the smoothing process on another color-separated image among the multiple color-separated images.

For example, when the color-separated image generation unit 21 generates color-separated images of red, green, and blue based on the image data, the color-separated image of green has a smaller amount of noise than the color-separated images of red and blue. Thus, the smoothing processing unit 22 repeatedly performs the smoothing process on the color-separated image of green a number of times smaller than the number of times of the smoothing process on the color-separated image of red and the color-separated image of blue.

At this time, for example, it is assumed that the amounts of noise of the color-separated images of red and blue are substantially equal to each other, and the amount of noise of the color-separated image of green is less than or equal to half the amounts of noise of the color-separated images of red and blue. At this time, the smoothing process may be repeatedly performed on the color-separated image of green half the number of times of the smoothing process on the color-separated image of red and the color-separated image of blue.

While "the amounts of noise are substantially equal to each other" may represent, for example, that a difference in the amount of noise between color-separated images is 10% or less, this does not imply any limitation.

While the bilateral filter has excellent filter performance, the amount of calculation with the bilateral filter increases. Thus, by reducing the number of times of application of the bilateral filter to the color-separated image having a small amount of noise, an advantageous effect of reducing the amount of calculation for the smoothing process is large.

The phase image generation unit 23 calculates phase information through a phase shift calculation on each of the color-separated images on which the smoothing process has been performed to generate a phase image. The phase image generation unit 23 can be implemented by various methods, and for example, can be implemented by a hardware electronic circuit such as a CR phase shift circuit, which uses capacitors (C) and resistors (R).

Then, the edge extraction unit 24 performs an edge extraction process on the phase image generated by the phase image generation unit 23. The function of the edge extraction unit 24 is implemented by hardware such as a semiconductor integrated circuit or software. The edge extraction unit 24 detects an edge from the input phase image and extracts pixels detected as an edge and pixels near the edge. The pixels near the edge are, for example, pixels adjacent to the pixels detected as the edge. The pixels near the edge are, for example, pixels within a range of reference pixels from the pixels detected as the edge.

The edge extraction unit 24 may extract the contour of the phase image using, for example, a Laplacian of Gaussian (LoG) filter. The LoG filter multiplies the luminance values of pixels of interest and pixels near the pixels of interest by a weight determined by a Gaussian function to perform smoothing.

Further, in order to extract an edge, the edge extraction unit 24 may apply a Laplacian filter to the pixels near the pixels of interest.

The defect detection unit 25 calculates a characteristic value based on the image data and detects a defect of the measurement object in accordance with the calculated characteristic value. The characteristic value may include the magnitude of a signal level (e.g., a peak value), the amount of change in signal (e.g., a slope), or the area of a potential defect region.

As described above, the smoothing processing unit 22 performs the smoothing process on the color-separated image, the phase image generation unit 23 generates the phase image for the color-separated image on which the smoothing process has been performed, and the edge extraction unit 24 performs the edge extraction process on the phase image. Then, the defect detection unit 25 detects a defect of the measurement object 2 based on the image after the edge extraction.

When the smoothing processing unit 22 repeatedly performs the smoothing process the number of times corresponding to the amount of noise included in the color-separated image, with such a flow of processing, the amount of noise by the phase shift calculations can be reduced, and erroneous extraction of an edge in the edge extraction process can be reduced. Furthermore, the periodic variation in the intensity of noise in a Log image after the edge extraction process (described later) can be reduced.

Measuring Process Executed by Measuring Apparatus 1

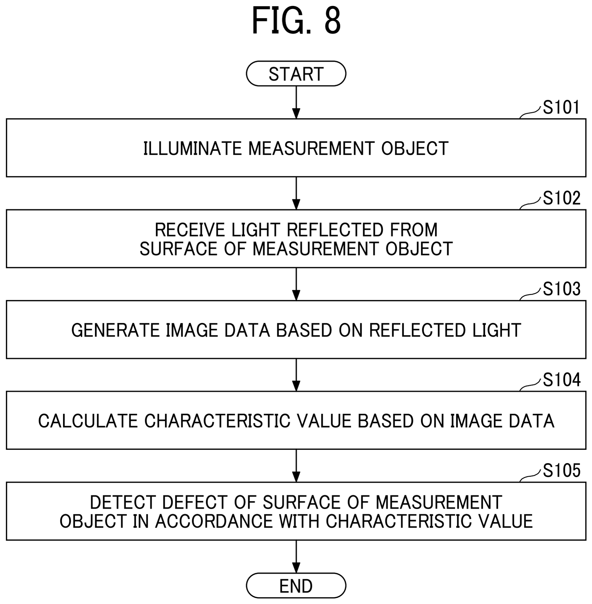

FIG. 8 is a flowchart presenting a measuring process executed by the measuring apparatus 1 according to the embodiment of the present disclosure. The measuring process executed by the measuring apparatus 1 can be implemented as a measuring method including steps serving as characteristic processing units included in the measuring apparatus 1.

The illuminator 11 of the measuring apparatus 1 illuminates a measurement object 2 in step S101. Subsequently, the light receiver 12 of the measuring apparatus 1 receives light specularly reflected from the measurement object 2 illuminated by the illuminator 11 in step S102.

The measuring apparatus 1 generates image data based on the light specularly reflected from the measurement object 2 and received by the light receiver 12 in step S103. When multiple light receivers 12 are used, image data from multiple regions of the measurement object 2 may be generated. The measuring apparatus 1 calculates a characteristic value based on the generated image data in step S104. The measuring apparatus 1 detects a defect of the measurement object 2 in accordance with the calculated characteristic value in step S105.

The measuring method according to the embodiment of the present disclosure involves the above-described steps. However, the measuring method according to the embodiment of the present disclosure may involve an additional step depending on factors such as the measurement conditions and environments.

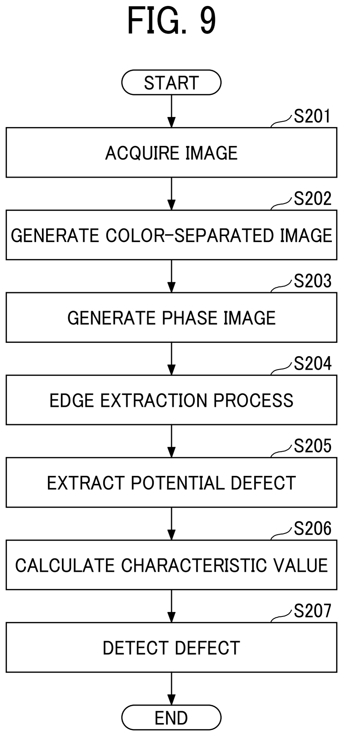

FIG. 9 is a flowchart presenting a defect detection process executed by the measuring apparatus 1 according to the embodiment of the present disclosure. It is assumed that three colors of red, green, and blue are used for the light source 13. In the following description, signals of color-separated images of red, green, and blue are referred to as a red signal, a green signal, and a blue signal, respectively.

The process performed by the measuring apparatus 1 can be roughly divided into two: preprocessing for enhancing a defect of the measurement object 2 and post-processing for detecting a defect based on an image obtained by the preprocessing. In FIG. 9, the preprocessing indicates steps S201 to S204, and the post-processing indicates steps S205 to S207.

The light receiver 12 receives light reflected from the measurement object 2 and acquires image data in step S201. The image data is used for defect detection in the measuring apparatus 1. At this time, the light receiver 12 may cause the acquired image data to be stored in the HDD 104 of the measuring apparatus 1.

Next, the measuring apparatus 1 generates a color-separated image from the image data of the measurement object 2 acquired in step S201, in step S202. Specifically, a red signal, a green signal, and a blue signal are extracted from the image data.

The measuring apparatus 1 generates a phase image based on the image data acquired in step S201, in step S203. Specifically, the measuring apparatus 1 performs the smoothing process on each of the red signal, the green signal, and the blue signal decomposed in step S202, based on the distribution of the luminance of light included in the image data. In the smoothing process, for example, a smoothing filter or a bilateral filter that stores an edge is used.

The measuring apparatus 1 calculates phase information through the phase shift calculation on each of the color-separated images on which the smoothing process has been performed. As a result, a two-dimensional phase image is acquired. To calculate the phase information through the phase shift calculation performed by the measuring apparatus 1, it is preferable that the distribution of the luminance of each light beam matches a sinusoidal pattern, although a distribution of the luminance of each light beam close to a sinusoidal pattern is also acceptable.

Then, the measuring apparatus 1 performs the edge extraction process based on the phase image generated in step S203, in step S204. Specifically, the edge extraction process is performed on the two-dimensional phase image, and a differential filter such as a Sobel filter, or a second-order differential filter such as a Laplacian filter or a LoG filter is used.

The preprocessing performed in steps S201 to S204 by the measuring apparatus 1 generates a two-dimensional defect-enhanced image in which a defect of the measurement object 2 is enhanced. The measuring apparatus 1 detects a defect based on the defect-enhanced image in the following post-processing. The defect-enhanced image is derived from the phase information, and at least one characteristic value is calculated based on the phase information.

The measuring apparatus 1 extracts a potential defect region from the two-dimensional defect-enhanced image in step S205. The extraction process combines methods such as a binarization process and a contraction/expansion process to extract a potential defect region. At this time, the potential defect region may be extracted based on a region having no defect on the measurement object 2.

The measuring apparatus 1 calculates a characteristic value based on at least the phase information for the potential defect region on the measurement object 2 in step S206. The measuring apparatus 1 may calculate one or multiple characteristic values based on a predetermined algorithm. The measuring apparatus 1 may calculate the characteristic value based on luminance information, phase information, color information, and information obtained by combining these items of information. The characteristic value may include the magnitude of a signal level (e.g., a peak value), the amount of change in signal (e.g., a slope), or the area of a potential defect region.

The measuring apparatus 1 detects a defect of the measurement object 2 in accordance with the characteristic value calculated in step S206, in step S207. In the detection process for a defect, the measuring apparatus 1 may determine the presence of a defect by comparing the characteristic value with the defect determination criterion. The number of characteristic values is not limited to one. The measuring apparatus 1 can calculate multiple characteristic values and compare each of the characteristic values with the defect determination criterion to comprehensively detect a defect.

The characteristic value can be calculated from the image data acquired by the light receiver 12 or from the luminance based on each of the decomposed signals of the respective colors. The characteristic value can also be calculated from a combination of these items of information and the phase information. For example, the measuring apparatus 1 may calculate characteristic values based on the phase information and characteristic values based on the luminance to detect defects. Since there are many types of defects, a characteristic value for the specific properties of each defect is calculated.

Spectra of Image Data

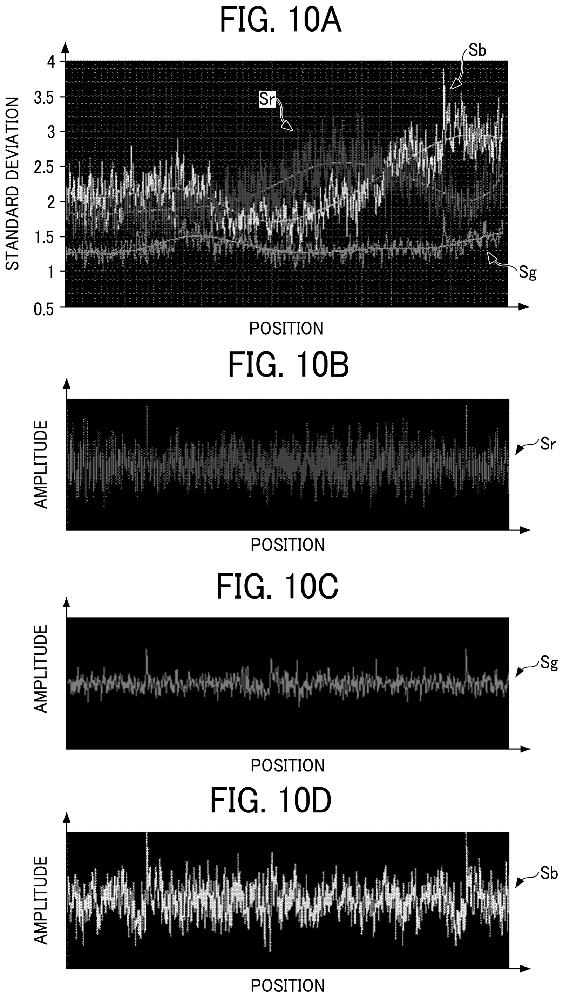

FIGS. 10A, 10B, 10C, and 10D are graphs presenting spectra of light reflected from a measurement object 2 in the measuring apparatus 1 according to the embodiment of the present disclosure. FIG. 10A presents the one-dimensional distributions of the standard deviations of the luminance in the conveyance direction of the light reflected from the measurement object 2. FIG. 10A illustrates a red signal Sr, a green signal Sg, and a blue signal Sb. FIGS. 10B, 10C, and 10D present the waveforms of the luminance based on the approximate curves for the red signal Sr, the green signal Sg, and the blue signal Sb, respectively.

In the graph of FIG. 10A, the vertical axis indicates the standard deviation, and the horizontal axis indicates the position in the conveyance direction. The presented graph is obtained by calculating, for image data generated through reception of light reflected from the measurement object 2, a standard deviation of luminance in a j-column direction using Equation (1) below, where symbol i represents the number of rows in a direction orthogonal to the conveyance direction and symbol j represents the number of columns in the conveyance direction. In Equation (1), symbol n represents the number of items of data, symbol μ represents a sample average of luminance for each column, and expression x(i, j) represents luminance in the i-th row and the j-th column.

$$T(j) = \sqrt{\frac{\sum\{x(i,j) - \mu(j)\}^2}{n}} \quad \cdots(1)$$

The graph in FIG. 10A is based on the luminance distribution of light reflected when illumination having the ideal sinusoidal luminance distribution for each color of red, green, and blue described with reference to FIG. 5D is emitted to the measurement object. As described above, in order to calculate accurate phase information by the phase shift calculations executed during defect detection, it is preferable that the illumination pattern is a stripe pattern combining light and dark patterns, where the luminance of light varies sinusoidally in the array direction Fa for each wavelength.

However, as presented in FIG. 10A, actually, the light reflected from the measurement object 2 is not the ideal sine wave because the peak values of the luminance of the red signal Sr, the green signal Sg, and the blue signal Sb are different from each other and there is a deviation in waveform due to a variation in light emission of the light sources or an error in array.

In the graph presented in FIG. 10A, the standard deviations calculated using Equation (1) were 0.26 for the red signal Sr, 0.11 for the green signal Sg, and 0.24 for the blue signal Sb. From this, while the variations in luminance of the red signal Sr and the blue signal Sb were substantially the same, the variation in luminance of the green signal Sg was smaller than the variations in luminance of the red signal Sr and the blue signal Sb.

When a defect of the measurement object 2 is detected, a problem is not a difference in peak value of luminance among the red signal Sr, the green signal Sg, and the blue signal Sb and a deviation in waveform but a difference in amount of noise included in each of the red signal Sr, the green signal Sg, and the blue signal Sb.

The noise in the present embodiment is defined as a difference between an ideal curve of luminance values, which would be obtained when the luminance distributions of the respective colors have ideal sinusoidal waveforms, and an actually measured curve of luminance values.

The noise amount is defined as a standard deviation of the noise extracted based on fitting, using a spline function or a sinusoidal function, to each color image signal obtained by color separation.

The magnitude of the noise amount substantially corresponds to the amplitude of the signal waveforms illustrated in FIGS. 10B, 10C, and 10D.

In the graphs presented in FIGS. 10B, 10C, and 10D, the vertical axis indicates the amplitude when the approximate curve of the signal waveform is 0, and the horizontal axis indicates the position in the conveyance direction as in FIG. 10A. When the graphs are compared to each other, the amplitudes of the signals of FIGS. 10B and 10D are substantially the same, but the amplitude of the signal of FIG. 10C is smaller than the amplitudes of the signals of FIGS. 10B and 10D. That is, while the amounts of noise of the red signal Sr and the blue signal Sb are substantially the same, the amount of noise of the green signal Sg is smaller than the amounts of noise of the red signal Sr and the blue signal Sb.

From the above, it can be seen that the illumination having the ideal sinusoidal luminance distribution for each of red, green, and blue is emitted to the measurement object, and the reflected light has a smaller amount of noise in the green signal Sg than in the red signal Sr and the blue signal Sb.

Smoothing Process According to Comparative Example

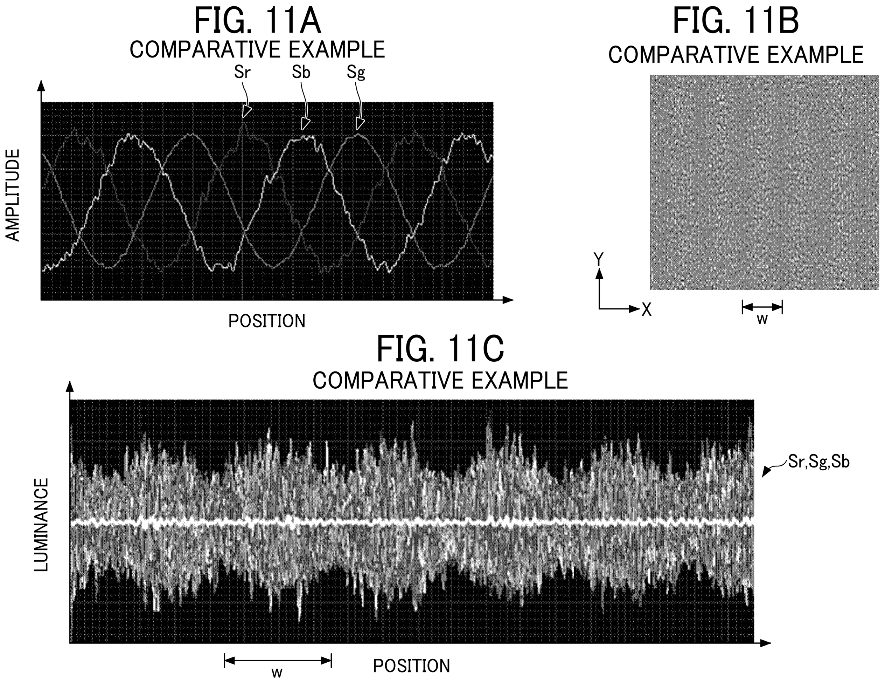

FIGS. 11A, 11B, and 11C are graphs and an image of a smoothing process according to a comparative example. FIG. 11A presents signals when the smoothing process is performed on a red signal Sr, a green signal Sg, and a blue signal Sb. FIG. 11B presents a Log image that is a defect-enhanced image using a logarithmic gamma curve generated using a conversion characteristic called Log gamma. FIG. 11C is a graph presenting the red signal Sr, the green signal Sg, and the blue signal Sb in an overlapping manner. The red signal Sr, the green signal Sg, and the blue signal Sb are the signals of the respective colors in the X direction at predetermined intervals in the Y direction in the Log image presented in FIG. 11B.

The Log image presented in FIG. 11B is a two-dimensional phase image obtained by performing an edge extraction process on reflected light using a logarithmic gamma curve generated using Log gamma, that is, an image of a defect-enhanced image. The X direction in the drawings indicates the conveyance direction, and the Y direction indicates the direction perpendicular to the conveyance direction.

As described above referring to FIGS. 10A to 10D, the illumination having the ideal sinusoidal luminance distribution for each of red, green, and blue is emitted to the measurement object, and the reflected light has a smaller amount of noise in the green signal Sg than in the red signal Sr and the blue signal Sb. With the smoothing process according to the comparative example, the smoothing process is repeatedly performed the same number of times on the red signal Sr, the green signal Sg, and the blue signal Sb regardless of the amounts of noise included in the color-separated images. In the comparative example presented in FIGS. 11A to 11C, it is assumed that the smoothing process was repeated four times on the red signal Sr, the green signal Sg, and the blue signal Sb.

In the comparative example, in order to simulate that the amount of noise of the green signal Sg is smaller than the amounts of noise of the red signal Sr and the blue signal Sb, data obtained by simulation in which the amount of noise of the green signal Sg is 1/3 of the amounts of noise of the red signal Sr and the blue signal Sb was used. When the Gaussian noises of the red signal Sr, the green signal Sg, and the blue signal Sb are denoted by $\mu(R)$, $\mu(G)$, and $\mu(B)$, respectively, $\mu(R)$ = 0.6, $\mu(G)$ = 0.2, and $\mu(B)$ = 0.6 were established.

As presented in FIG. 11A, the signal obtained by performing the smoothing process on the green signal Sg having a small amount of noise has a waveform having a smaller amount of noise than the signals obtained by performing the smoothing process on the red signal Sr and the blue signal Sb. FIGS. 11B and 11C present results obtained by calculating phase information through the phase shift calculation on each of the color-separated images including the signals in FIG. 11A on which the smoothing process has been performed to generate a phase image, and performing an edge extraction process on the generated phase image. As presented in the drawings, since the amount of noise of the green signal Sg on which the smoothing process has been performed is smaller than the amounts of noise of the red signal Sr and the blue signal Sb on which the smoothing process has been performed, it is conceivable that the intensity of noise periodically varies in the X direction at intervals of a width w in the drawings.

When the measurement object 2 has a defect, and when the intensity of noise periodically varies in the light reflected from the measurement object 2, disadvantages such as failure to detect a defect and erroneous detection of a defect occur. Thus, the smoothing process by the measuring apparatus 1 according to the present embodiment has been found. The smoothing process according to the embodiment of the present disclosure will be described below.

Smoothing Process According to Present Embodiment

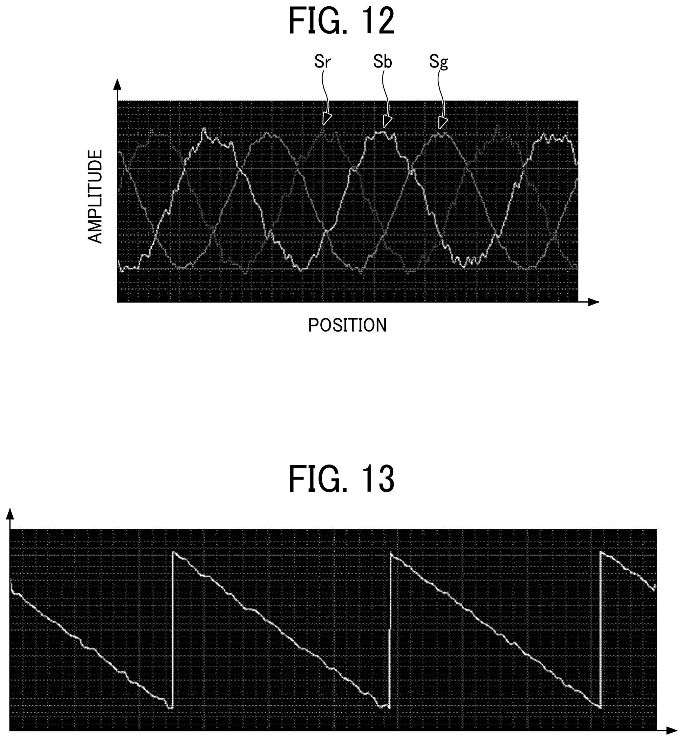

FIG. 12 is a graph presenting signals when the smoothing process is performed on a red signal Sr, a green signal Sg, and a blue signal Sb in the measuring apparatus 1 according to the embodiment of the present disclosure. Since the amount of noise of the green signal Sg is smaller than the amounts of noise of the red signal Sr and the blue signal Sb, the simulation was performed with the Gaussian noises of the red signal Sr, the green signal Sg, and the blue signal Sb set to $\mu(R)$ = 0.6, $\mu(G)$ = 0.2, and $\mu(B)$ = 0.6.

The smoothing processing unit 22 of the measuring apparatus 1 repeatedly performs the smoothing process on a color-separated image having a small amount of noise a number of times smaller than the number of times of the smoothing process on another color-separated image.

Since the Gaussian noises of the red signal Sr, the green signal Sg, and the blue signal Sb are $\mu(R)$ = 0.6, $\mu(G)$ = 0.2, and $\mu(B)$ = 0.6, the integer ratio of the amounts of noise is the red signal Sr: the green signal Sg: the blue signal Sb = 3:1:3. At this time, the number of times of the smoothing process may be a ratio obtained by rounding up or down to obtain an integer based on the integer ratio of the amounts of noise.

That is, when the number of times of the smoothing process on the red signal Sr is four, the number of times of the smoothing process on the green signal Sg is 4/3, and the number of times of the smoothing process on the blue signal Sb is four. Thus, the number of times of the smoothing process on the green signal Sg can be one or two. In the illustrated example, it is assumed that the smoothing process is repeated four times on the red signal Sr and the blue signal Sb and the smoothing process is repeated two times on the green signal Sg.

As presented in FIG. 12, the amount of noise of the green signal Sg when the number of times of the smoothing process is small is larger than the amount of noise of the green signal Sg on which the smoothing process has been performed the same number of times as the number of times of the smoothing process on the red signal Sr and the blue signal Sb as in the comparative example of FIG. 11A. The amount of noise of the green signal Sg on which the smoothing process has been performed is substantially the same as the amounts of noise of the red signal Sr and the blue signal Sb on which the smoothing process has been performed.

FIG. 13 is a graph presenting an example of a signal obtained by performing the phase shift calculation on a signal on which the smoothing process has been performed in the measuring apparatus 1 according to the embodiment of the present disclosure. The phase image generation unit 23 calculates phase information through the phase shift calculation on each of the color-separated images on which the smoothing process has been performed to generate a phase image. The phase image generation unit 23 generates phase information as presented in the drawing by inputting the signal on which the smoothing process has been performed to a hardware electronic circuit such as a CR phase shift circuit.

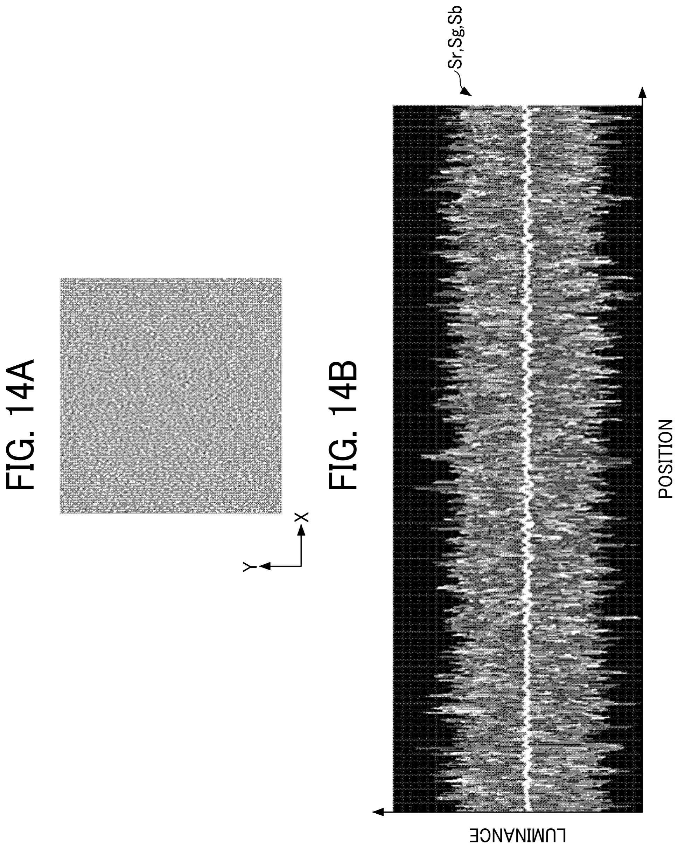

FIGS. 14A and 14B are an image and a graph of a Log image on which the smoothing process has been performed in the measuring apparatus 1 according to the embodiment of the present disclosure. FIG. 14A presents a Log image that is a defect-enhanced image obtained by performing the edge extraction process on a phase image. FIG. 14B is a graph presenting a red signal Sr, a green signal Sg, and a blue signal Sb in an overlapping manner. The red signal Sr, the green signal Sg, and the blue signal Sb are the signals of the respective colors in the X direction at predetermined intervals in the Y direction in the Log image presented in FIG. 14A.

The edge extraction unit 24 performs the edge extraction process on the phase images generated by the phase image generation unit 23. The Log image presented in FIG. 14A does not have a periodic variation in the intensity of noise in the X direction unlike the Log image according to the comparative example described with reference to FIGS. 11A to 11C, and the noise is randomly distributed. Similarly, in the graph of FIG. 14B, the periodic variation in the intensity of noise in the X direction does not occur, and the noise is randomly distributed.

From the above, when the smoothing process is repeatedly performed on a color-separated image having a small amount of noise a smaller number of times than the number of times of the smoothing process on another color-separated image as in the smoothing process according to the present embodiment, the noise in the Log image based on the light reflected from the measurement object 2 is randomly distributed.

While the smoothing process is repeated four times on the red signal Sr and the blue signal Sb and the smoothing process is repeated two times on the green signal Sg in the above-described example, the number of times of the smoothing process is not limited the above-described numbers of times.

As another example of the number of times of the smoothing process, when an integer ratio of the amounts of noise of the red signal Sr, the green signal Sg, and the blue signal Sb is the red signal Sr: the green signal Sg: and the blue signal Sb = 3:2:3, the number of times of the smoothing process on the red signal Sr is set to four. At this time, the number of times of the smoothing process on the green signal Sg is 8/3, and the number of times of the smoothing process on the blue signal Sb is four.

Thus, the number of times of the smoothing process on the green signal Sg can be two or three.

As described above, the number of times of the smoothing process performed by the smoothing processing unit 22 of the measuring apparatus 1 can be appropriately set in accordance with the amount of noise included in the color-separated image.

Modifications

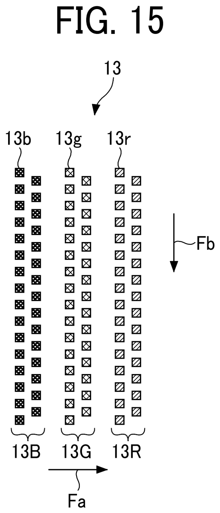

FIG. 15 is a diagram illustrating an optical arrangement of a modification of the measuring apparatus 1 according to the embodiment of the present disclosure. The illustrated example illustrates another example of the array of the point light sources 13b, 13g, and 13r. In FIG. 15, like reference signs are applied to components identical or corresponding to components described above, and redundant description is omitted.

In FIG. 15, unlike FIG. 4C, multiple point light sources 13r are arranged in a staggered manner, multiple point light sources 13g are arranged in a staggered manner, and multiple point light sources 13b are arranged in a staggered manner with respect to the orthogonal direction Fb. Even when the multiple point light sources 13r, 13g, and 13b are arranged in a staggered manner, the measurement object 2 can be illuminated with an illumination pattern similar to the illumination pattern of the present embodiment.

The measuring apparatus 1 according to the present embodiment generates multiple color-separated images based on image data generated through reception of light reflected from the measurement object 2, and repeatedly performs the smoothing process on each of the generated multiple color-separated images the number of times corresponding to the amount of noise included in the color-separated image. Thus, in the signals after the smoothing process, the multiple color-separated images include substantially equivalent amounts of noise, and in the defect-enhanced image on which the processing such as the phase shift calculations and the edge extraction has been performed, the periodic variation in the intensity of noise is reduced, and the noise is randomly distributed.

Since the measuring apparatus 1 detects a defect of the measurement object 2 based on the defect-enhanced image in which the noise is randomly distributed, erroneous extraction of a potential defect can be reduced.

The smoothing processing unit 22 repeatedly performs the smoothing process on a color-separated image having a small amount of noise among the multiple color-separated images a number of times smaller than the number of times of the smoothing process on another color-separated image among the multiple color-separated images. Thus, by reducing the number of times of applying the smoothing filter, a small potential defect that could not be extracted due to excessive smoothing can be accurately extracted.

Accordingly, with the measuring apparatus 1 according to the present embodiment, the accuracy of measuring the measurement object 2 can be increased.

The embodiments have been described above; however, the present disclosure is not limited to the above-described embodiments and can be modified and improved in various ways within the scope of the present disclosure.

A measuring apparatus (1) includes an illuminator (11), a light receiver (12), a color-separated image generation unit (21), and a smoothing processing unit (22). The illuminator (11) emits light to an object to be measured. The light receiver (12) receives reflection light reflected from the object illuminated by the light emitted from the illuminator (11); and generates image data based on the reflection light. The color-separated image generation unit (21) is configured to generate multiple color-separated images, each having corresponding amount of noise, based on the image data generated by the light receiver (12). The smoothing processing unit (22) is configured to repeatedly perform a smoothing process on each of the multiple color-separated images generated by the color-separated image generation unit (21), a number of times according to the corresponding amount of noise.

The smoothing processing unit (22) is configured to repeatedly perform the smoothing process on: a first color-separated image of the multiple color-separated images a first number of times, the first color-separated image having a first amount of noise of the corresponding amount of noise; and a second color-separated image of the multiple color-separated images a second number of times larger than the first number of times, the second color-separated image having a second amount of noise of the corresponding amount of noise. The second amount is larger than the first amount.

The color-separated image generation unit (21) is configured to generate, based on the image data: a red color-separated image; a green color-separated image; and a blue color-separated image. The smoothing processing unit (22) is configured to repeatedly perform on: the green color-separated image a first number of times; and the red color-separated image and the blue color-separated image a second number of times larger than the first number of times.

The light receiver (12) includes an image sensor (5) having a Bayer pixel array. The light receiver outputs an output signal according to the reflection light; and generates the image data based on the output signal.

The smoothing processing unit (22) is further configured to perform the smoothing process with a bilateral filter.

The measuring apparatus (1) further includes a phase image generation unit (23) configured to: calculate phase information through a phase shift calculation on each of the color-separated images on which the smoothing process has been performed by the smoothing processing unit (22); and generate a phase image based on the phase information calculated; and an edge extraction unit (24) configured to perform an edge extraction process on the phase image generated by the phase image generation unit (23).

The measuring apparatus (1) further includes a defect detection unit (25) configured to: calculate a characteristic value based on the image data; and detect a defect of the object in accordance with the characteristic value calculated.

The illuminator (11) emits light to a vehicle body conveyed in a conveyance direction.

A measuring method executed by a measuring apparatus (1) includes emitting (S101) light to an object to be measured; receiving (S102) reflection light reflected from the object illuminated by the light emitted in the emitting (S101); generating (S103) image data based on the reflection light; generating (S202) multiple color-separated images, each having corresponding amount of noise, based on the image data generated in the generating (S103); and repeatedly performing (S203) a smoothing process on each of the multiple color-separated images generated, a number of times according to the corresponding amount of noise.

A carrier medium that causes a measuring apparatus (1) that measures a measurement object to execute a process, the process including emitting (S101) light to an object to be measured; receiving (S102) reflection light reflected from the object illuminated by the light emitted in the emitting (S101); generating (S103) image data based on the reflection light; generating (S202) multiple color-separated images, each having corresponding amount of noise, based on the image data generated in the generating (S103); and repeatedly performing (S203) a smoothing process on each of the multiple color-separated images generated, a number of times according to the corresponding amount of noise.

Each of the functions of the described embodiments may be implemented by one or more processing circuits or circuitry. Examples of the "processing circuits or circuitry" in the specification include a programmed processor, as a processor that is mounted on an electronic circuit and that performs the functions through software. The term "processing circuit" or "processing circuitry," as used herein, includes a device programmed to implement each function by software, such as a processor implemented by an electronic circuit, and devices designed to implement the functions described above, such as an application-specific integrated circuit (ASIC), a digital signal processor (DSP), a field programmable gate array (FPGA), and existing circuit modules.

Aspects of the disclosure are, for example, as follows.

According to Aspect 1, a measuring apparatus that measures a measurement object includes a color-separated image generation unit that generates multiple color-separated images based on image data generated through reception of light reflected from the measurement object irradiated with illumination light; and a smoothing processing unit that repeatedly performs a smoothing process on each of the generated multiple color-separated images a number of times corresponding to an amount of noise included in the color-separated image.

According to Aspect 2, in the measuring apparatus of Aspect 1, the smoothing processing unit repeatedly performs the smoothing process on a color-separated image having a small amount of noise among the multiple color-separated images a number of times smaller than a number of times of the smoothing process on another color-separated image among the multiple color-separated images.

According to Aspect 3, in the measuring apparatus of Aspect 1 or Aspect 2, the color-separated image generation unit generates the color-separated images of red, green, and blue based on the image data, and the smoothing processing unit repeatedly performs the smoothing process on the color-separated image of green a number of times smaller than a number of times of the smoothing process on the color-separated image of red and the color-separated image of blue.

According to Aspect 4, in the measuring apparatus of any one of Aspect 1 to Aspect 3, the image data is generated based on a signal output from an imaging element having a pixel array that is a Bayer array.

According to Aspect 5, in the measuring apparatus of any one of Aspect 1 to Aspect 4, the smoothing processing unit performs the smoothing process with a bilateral filter.

According to Aspect 6, the measuring apparatus of any one of Aspect 1 to Aspect 5 further includes a phase image generation unit that calculates phase information through a phase shift calculation on each of the color-separated images on which the smoothing process has been performed to generate a phase image; and an edge extraction unit that performs an edge extraction process on the generated phase image.

According to Aspect 7, the measuring apparatus of any one of Aspect 1 to Aspect 6 further includes a defect detection unit that calculates a characteristic value based on the image data to detect a defect of the measurement object in accordance with the calculated characteristic value.

According to Aspect 8, in the measuring apparatus of any one of Aspect 1 to Aspect 7, the measurement object includes a vehicle body that is irradiated with the illumination light while being conveyed in a conveyance direction.

According to Aspect 9, a measuring method executed by a measuring apparatus that measures a measurement object includes generating multiple color-separated images based on image data generated through reception of light reflected from the measurement object irradiated with illumination light; and repeatedly performing a smoothing process on each of the generated multiple color-separated images a number of times corresponding to an amount of noise included in the color-separated image.

According to Aspect 10, a program causes a measuring apparatus that measures a measurement object to execute a process including generating multiple color-separated images based on image data generated through reception of light reflected from the measurement object irradiated with illumination light; and repeatedly performing a smoothing process on each of the generated multiple color-separated images a number of times corresponding to an amount of noise included in the color-separated image.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

**Claims**

1. A measuring apparatus (1) comprising:

   an illuminator (11) to emit light to an object to be measured; and
   a light receiver (12) to:

      receive reflection light reflected from the object illuminated by the light emitted from the illuminator (11); and
      generate image data based on the reflection light;

   a color-separated image generation unit (21) configured to generate multiple color-separated images, each having corresponding amount of noise, based on the image data generated by the light receiver (12); and
   a smoothing processing unit (22) configured to repeatedly perform a smoothing process on each of the multiple color-separated images generated by the color-separated image generation unit (21), a number of times according to the corresponding amount of noise.

2. The measuring apparatus (1) according to claim 1, wherein:
   the smoothing processing unit (22) is configured to repeatedly perform the smoothing process on:

      a first color-separated image of the multiple color-separated images a first number of times, the first color-separated image having a first amount of noise of the corresponding amount of noise; and
      a second color-separated image of the multiple color-separated images a second number of times larger than the first number of times,

         the second color-separated image having a second amount of noise of the corresponding amount of noise, and
the second amount larger than the first amount.

3. The measuring apparatus (1) according to claim 1 or 2, wherein:
the color-separated image generation unit (21) is configured to generate, based on the image data:

a red color-separated image;
a green color-separated image; and
a blue color-separated image; and
the smoothing processing unit (22) is configured to repeatedly perform on:
the green color-separated image a first number of times; and
the red color-separated image and the blue color-separated image a second number of times larger than the first number of times.

4. The measuring apparatus (1) according to any one of claims 1 to 3, wherein:

the light receiver (12) includes an image sensor (5) having a Bayer pixel array,
the light receiver to:

output an output signal according to the reflection light; and
generate the image data based on the output signal.

5. The measuring apparatus (1) according to any one of claim 1 to 4, wherein:
the smoothing processing unit (22) is further configured to perform the smoothing process with a bilateral filter.

6. The measuring apparatus (1) according to any one of claims 1 to 5, further comprising:

a phase image generation unit (23) configured to:

calculate phase information through a phase shift calculation on each of the color-separated images on which the smoothing process has been performed by the smoothing processing unit (22); and
generate a phase image based on the phase information calculated; and

an edge extraction unit (24) configured to perform an edge extraction process on the phase image generated by the phase image generation unit (23).

7. The measuring apparatus (1) according to any one of claims 1 to 6, further comprising a defect detection unit (25) configured to:

calculate a characteristic value based on the image data; and
detect a defect of the object in accordance with the characteristic value calculated.

8. The measuring apparatus (1) according to any one of claims 1 to 7, wherein:
the illuminator (11) emits light to a vehicle body conveyed in a conveyance direction.

9. A measuring method executed by a measuring apparatus (1) comprising:

emitting (S101) light to an object to be measured;
receiving (S102) reflection light reflected from the object illuminated by the light emitted in the emitting (S101);
generating (S103) image data based on the reflection light;
generating (S202) multiple color-separated images, each having corresponding amount of noise, based on the image data generated in the generating (S103); and
repeatedly performing (S203) a smoothing process on each of the multiple color-separated images generated, a number of times according to the corresponding amount of noise.

10. A carrier medium that causes a measuring apparatus (1) that measures a measurement object to execute a process, the process comprising:

emitting (S101) light to an object to be measured;
receiving (S102) reflection light reflected from the object illuminated by the light emitted in the emitting (S101);
generating (S103) image data based on the reflection light;
generating (S202) multiple color-separated images, each having corresponding amount of noise, based on the image data generated in the generating (S103); and
repeatedly performing (S203) a smoothing process on each of the multiple color-separated images generated, a number of times according to the corresponding amount of noise.

# FIG. 1

EP 4 776 219 A1

# FIG. 2

```
                                              ⌒10
┌──────────────────────────────────────────────┐
│           OPTICAL SECTION                      │
│       ⌒11                        ⌒12(5)        │
│  ┌─────────────┐           ┌─────────────┐    │
│  │             │           │             │    │
│  │  ILLUMINA-  │           │    LIGHT    │    │
│  │    TOR      │           │   RECEIVER  │    │
│  │             │           │             │    │
│  └─────────────┘           └─────────────┘    │
└──────────────────────────────────────────────┘
```

ILLUMINATION
DIRECTION

LIGHT RECEIVING
DIRECTION

2P

# FIG. 3A

# FIG. 3B

# FIG. 4A

# FIG. 4B

# FIG. 4C

## FIG. 5A

13

13r 13g 13b 13r 13g 13b 13r 13g 13b

Fb

13R 13G 13B 13R 13G 13B 13R 13G 13B

Fa

## FIG. 5B

$I$

Iar Iag Iab

Fa

## FIG. 5C

$I$

$(Ibr \fallingdotseq Ibg \fallingdotseq Ibb)$

Fb

## FIG. 5D

15

$2\pi$

Fb

Fa

# FIG. 6

```
                              20

  ┌─────────────────────────────────────────────────────────────┐
  │                                                               │
  │     ┌──────101      ┌──────102      ┌──────103               │
  │    ┌──────────┐    ┌──────────┐    ┌──────────┐              │
  │    │PROCESSOR │    │   ROM    │    │   RAM    │              │
  │    └──────────┘    └──────────┘    └──────────┘              │
  │         ↕               ↕               ↕                     │
  │                                                    ┌──109     │
  │ ←──────────────────────────────────────────────────────────→ │
  │         ↕               ↕                                     │
  │     ┌──────104      ┌──────105                               │
  │    ┌──────────┐    ┌──────────────────┐                      │
  │    │   HDD    │    │  INPUT-OUTPUT I/F │                      │
  │    └──────────┘    └──────────────────┘                      │
  │                                                               │
  └─────────────────────────────────────────────────────────────┘
```

# FIG. 7

1

MEASURING APPARATUS

21

COLOR-SEPARATED
IMAGE GENERATION UNIT

22

SMOOTHING
PROCESSING UNIT

23

PHASE IMAGE
GENERATION UNIT

24

EDGE EXTRACTION
PROCESSING UNIT

25

DEFECT DETECTION UNIT

# FIG. 8

```
┌──────────┐
│  START   │
└──────────┘
     │
     ▼                                          ⟋S101
┌─────────────────────────────────────────────────────┐
│           ILLUMINATE MEASUREMENT OBJECT              │
└─────────────────────────────────────────────────────┘
     │
     ▼                                          ⟋S102
┌─────────────────────────────────────────────────────┐
│             RECEIVE LIGHT REFLECTED FROM             │
│            SURFACE OF MEASUREMENT OBJECT             │
└─────────────────────────────────────────────────────┘
     │
     ▼                                          ⟋S103
┌─────────────────────────────────────────────────────┐
│       GENERATE IMAGE DATA BASED ON REFLECTED LIGHT   │
└─────────────────────────────────────────────────────┘
     │
     ▼                                          ⟋S104
┌─────────────────────────────────────────────────────┐
│     CALCULATE CHARACTERISTIC VALUE BASED ON IMAGE DATA│
└─────────────────────────────────────────────────────┘
     │
     ▼                                          ⟋S105
┌─────────────────────────────────────────────────────┐
│        DETECT DEFECT OF SURFACE OF MEASUREMENT       │
│     OBJECT IN ACCORDANCE WITH CHARACTERISTIC VALUE   │
└─────────────────────────────────────────────────────┘
     │
     ▼
┌──────────┐
│   END    │
└──────────┘
```

# FIG. 9

START

S201

ACQUIRE IMAGE

S202

GENERATE COLOR-SEPARATED IMAGE

S203

GENERATE PHASE IMAGE

S204

EDGE EXTRACTION PROCESS

S205

EXTRACT POTENTIAL DEFECT

S206

CALCULATE CHARACTERISTIC VALUE

S207

DETECT DEFECT

END

# FIG. 10A

# FIG. 10B

# FIG. 10C

# FIG. 10D

FIG. 11A
COMPARATIVE EXAMPLE

FIG. 11B
COMPARATIVE EXAMPLE

FIG. 11C
COMPARATIVE EXAMPLE

# FIG. 12

Sr    Sb    Sg

AMPLITUDE

POSITION

# FIG. 13

## FIG. 14A

Y
X

EP 4 776 219 A1

## FIG. 14B

LUMINANCE

Sr,Sg,Sb

POSITION

# FIG. 15

Europäisches
Patentamt
European
Patent Office
Office européen
des brevets

# EUROPEAN SEARCH REPORT

**Application Number**

EP 25 22 0676

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 108 257 138 B (UNIV XIAN POLYTECHNIC) 30 July 2021 (2021-07-30) * abstract * * paragraph [0006] * * paragraph [0049] * ----- | 1-10 | INV. G06T5/70 G06T7/00 G06T7/13 |
| A | HE WEI ET AL: "Hyperspectral Image Denoising via Noise-Adjusted Iterative Low-Rank Matrix Approximation", IEEE JOURNAL OF SELECTED TOPICS IN APPLIED EARTH OBSERVATIONS AND REMOTE SENSING IEEE, USA, vol. 8, no. 6, 1 June 2015 (2015-06-01), pages 3050-3061, XP011665036, ISSN: 1939-1404, DOI: 10.1109/JSTARS.2015.2398433 [retrieved on 2015-08-03] * abstract * * page 3050, column 2, paragraph 1 * * page 3051, column 1, paragraph 2 - paragraph 3 * * page 3053, column 1, paragraph 2 - page 3054, column 2, paragraph 2 * ----- | 1-10 | |

**TECHNICAL FIELDS SEARCHED (IPC)**

G06T

The present search report has been drawn up for all claims

| Place of search | Date of completion of the search | Examiner |
|---|---|---|
| Munich | 22 April 2026 | Turina, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 0676

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2026

| Patent document cited in search report | Publication date | Patent family member(s) | Publication date |
|---|---|---|---|
| CN 108257138 B | 30-07-2021 | NONE | |

For more details about this annex : see Official Journal of the European Patent Office, No. 12/82

**REFERENCES CITED IN THE DESCRIPTION**

**Patent documents cited in the description**

- JP 4322230 B

- JP 5790446 B